Europäisches Patentamt

European Patent Office

Office européen des brevets

(19)

(11) Numéro de publication : **0 019 564**
**B1**

(12) **FASCICULE DE BREVET EUROPÉEN**

(45) Date de publication du fascicule du brevet :
07.12.83

(51) Int. Cl.³ : **B 29 D 27/00, B 29 D 23/04**

(21) Numéro de dépôt : 80420054.1

(22) Date de dépôt : 08.05.80

(54) Procédé et appareillage pour l'extrusion de tubes plastiques à parois composites.

(30) Priorité : 10.05.79 FR 7912515

(43) Date de publication de la demande :
26.11.80 Bulletin 80/24

(45) Mention de la délivrance du brevet :
07.12.83 Bulletin 83/49

(84) Etats contractants désignés :
AT BE CH DE GB IT LI LU NL SE

(56) Documents cités :
FR-A- 2 248 138
FR-A- 2 391 058
GB-A- 1 211 860
US-A- 3 354 506
US-A- 4 125 585

(73) Titulaire : Société Generale de Canalisations
SOGECAN
152 Boulevard Malesherbes
F-75017 Paris (FR)

(72) Inventeur : Doucet, Marcel
203 Rue Ordener
F-75018 Paris (FR)

(74) Mandataire : Pascaud, Claude et al
PECHINEY UGINE KUHLMANN 28, rue de Bonnel
F-69433 Lyon Cedex 3 (FR)

EP 0 019 564 B1

Jouve, 18, rue St-Denis, 75001 Paris, France

## Procédé et appareillage pour l'extrusion de tubes plastiques à parois composites

La présente invention concerne un procédé et un appareillage pour l'extrusion de tubes plastiques à parois composites, et plus particulièrement, de tubes plastiques de grandes dimensions.

On utilise couramment des tubes plastiques pour constituer des canalisations enterrées, en raison de leur légèreté, de leur facilité de pose et de raccordement, de leur résistance à la corrosion. Mais, dès que l'on atteint les grandes dimensions nécessaires pour l'écoulement des eaux usées, des eaux de pluies, le prix devient prohibitif.

On a déjà tenté d'alléger ces tubes tout en maintenant une rigidité et une résistance à l'écrasement suffisante, par différents moyens: utilisation de parois ondulées, formation du tube par enroulement en spirale d'un profilé cloisonné, puis collage ou soudure, ou utilisation de plastique cellulaire rigide.

Cette dernière possibilité fait l'objet, en particulier, des brevets français n° 1.498.620, 1.543.573 et des certificats d'addition n° 94.122, 94.389 et 2.063.589. Le produit est constitué par un cœur en mousse plastique expansée, dont la densité augmente progressivement du cœur à la périphérie, et par une paroi lisse, qui est une peau mince de 0,1 à 0,3 mm d'épaisseur. De tels tubes sont sensibles à l'érosion des surfaces, relativement fragiles et du fait de tensions internes, subissent des variations dimensionnelles importantes quand on les porte à une température élevée.

Il est également connu de fabriquer des tubes plastiques à structure composite, dont la paroi est formée de deux ou trois couches de nature différente, par coextrusion dans les filières spéciales (FR-A-2 391 058). Cette technique est aussi décrite, par exemple, dans l'ouvrage «Techniques de l'Ingénieur», Tome A9, article A 3652, pages 137-138. Sa mise en œuvre consiste à réunir les différentes couches, à leur dimension finale, au niveau de la filière d'extrusion. De ce fait, il faut disposer d'autant d'outillages d'extrusion que de dimensions de tubes et de couches, ce qui alourdit considérablement les coûts de fabrication.

L'objet de la présente invention est un procédé de fabrication par extrusion de tubes plastiques à structure composite, formés par deux parois enserrant une matière de remplissage allégé adhérant auxdites parois, procédé selon lequel on introduit par extrusion dans une tête de répartition chauffée et régulée la matière constituant les parois des tubes, on sépare cette matière en deux veines d'écoulement coaxiales distinctes entre lesquelles on injecte, par une deuxième tête d'extrusion la matière de remplissage allégé formant une troisième veine d'écoulement, on rapproche et on met en contact les trois veines, constituant ainsi une ébauche avec sa structure définitive, et à laquelle on donne ses formes et . dimensions définitives par passage dans un outillage classique comportant un trèfle, une filière à profil convergent, un mandrin et un conformateur extérieur, ce procédé étant caractérisé en ce que l'ébauche, après avoir reçu sa structure définitive à trois couches dès la sortie de la tête de répartition passe sur un cône divergent placé entre la tête de répartition et le trèfle de façon à lui conférer un diamètre supérieur au diamètre du tube définitif puis passe sur la zone convergente de la filière.

Un autre objet de la présente invention est un appareillage pour la mise en œuvre du procédé de fabrication par extrusion de tubes plastiques à structure composite comportant :
— une tête de répartition, chauffée et régulée, alimentée, d'une part, par une première extrudeuse qui introduit la matière constituant les parois, et d'autre part, par une seconde extrudeuse qui introduit la matière de remplissage,
— un moyen de séparation en deux veines d'écoulement distinctes, de la matière constituant les parois,
— un moyen d'introduction, entre ces deux veines d'écoulement, de la matière de remplissage,
— un moyen de rapprochement et de mise en contact des trois veines pour former l'ébauche avec sa structure définitive,
— un outillage d'extrusion, chauffé et régulé, comportant un trèfle, une filière à profil convergent, un mandrin,
— un conformateur extérieur, appareillage caractérisé en ce qu'il comporte un cône de sortie divergent disposé à la sortie de la tête de répartition et avant le trèfle qui supporte l'outillage d'extrusion, le diamètre maximal du cône divergent étant supérieur au diamètre du tube extrudé.

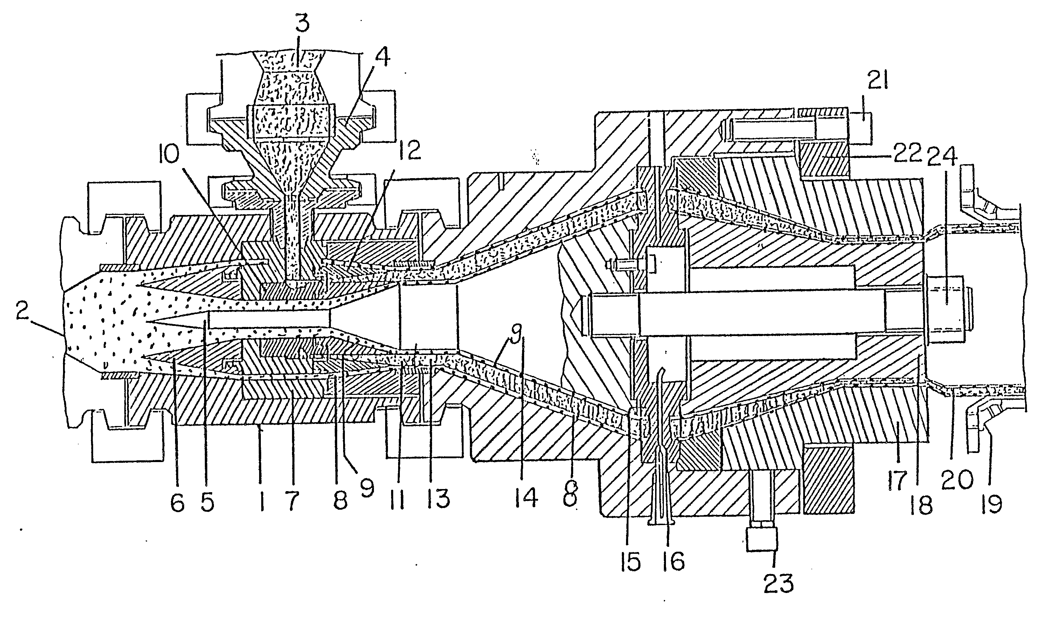

La figure 1 montre l'ensemble de l'appareillage pour la mise en œuvre du procédé.

La tête de répartition (1) est alimentée, d'une part, en matière plastique (2), par une extrudeuse de type classique non représentée et située en amont et, d'autre part, en matière de remplissage (3) par une deuxième extrudeuse (4). Le cône central (5) assure, de façon connue, la formation du tube. La pièce annulaire (6) solidaire du trèfle (7) provoque une séparation en deux veines d'écoulement distinctes (8) et (9) du cylindre de matière plastifiée sortant de l'extrudeuse (2). Le trèfle (7) est, de façon connue, chauffé et régulé en température.

La matière de remplissage (3), issue de l'extrudeuse (4), est injectée à travers une branche du trèfle (7) dans un cœur de répartition classique à perte de charge variable (10). A la sortie du cœur, la matière s'insère à vitesse d'avance constante sur toute la périphérie du cœur entre les deux couches (8) et (9), puis les trois éléments : couches (8), (9) et matière de remplissage (3) qui forme une troisième veine d'écoulement (11), sont réunis par le dispositif (12) pour former l'ébauche à trois couches (13). Le débit des deux extrudeuses doit être réglé dans la proportion de la quantité des flux des deux matières (parois et remplissage) définis par les sections de sortie des couches (8) + (9)/(3). Lorsque la matière de remplissage (3) est une mousse plastique expansible, l'expansion ne peut pas encore se produire à ce niveau en raison de la pression élevée qui y règne.

A la sortie de la tête de répartition, l'ébauche a sa structure définitive en ce qui concerne la répartition en masse des trois couches, et cette répartition va se conserver jusqu'à la sortie de l'outillage d'extrusion. L'ébauche à trois couches (13) ainsi formée est ensuite amenée à son état et à ses dimensions définitives. Elle défile sur le cône de sortie divergent (14), puis à travers le trèfle (15), chauffé et régulé à partir de la sonde (16) et finalement est extrudée entre la filière (17) et le mandrin (18).

Le passage sur le cône de sortie divergent permet de donner à l'ébauche une dimension supérieure à celle du tube définitif, puis, après passage sur le trèfle dont les branches provoquent une séparation dans les veines d'écoulement, d'assurer le ressoudage de l'ébauche dans la zone convergente de la filière, et d'obtenir ainsi un tube parfaitement homogène et à surfaces intérieure et extérieure lisses et sans défaut.

L'ébauche sortant de l'outillage est ensuite calibrée et refroidie par un conformateur extérieur (19), soit à pression d'air s'il n'y a pas d'expansion sensible de l'ébauche, soit à dépression si l'ébauche s'expense notablement en diamètre et épaisseur, dans le cas en particulier où la matière (3) est une matière expansible. Dans ce cas, il faut prévoir un espace suffisant entre la sortie de l'outillage et le conformateur pour que l'expansion de la mousse plastique interne et des deux parois extérieures (8) et intérieures (9) ait le temps de s'effectuer. Pour changer les dimensions du tube (20), il suffit de changer la filière (17) et le mandrin (18) qui sont des pièces simples et robustes, maintenues et positionnées de façon connue, par les moyens de serrage et de réglage (21), (22), (23) et (24).

Les parois (8) et (9) du tube peuvent être constituées par toute matière thermoplastique extrudable, et, en particulier, par du chlorure de polyvinyle, du polyéthylène, du propylène, du polystyrène.

La matière de remplissage (3) est une matière allégée, telle qu'une mousse plastique expansible choisie pour sa compatibilité avec la matière constituant les parois. Il est, en effet, indispensable qu'il s'établisse une adhérence suffisante entre les parois et le remplissage, de façon à assurer la cohésion de la structure composite. Parmi ces mousses expansibles, on peut citer des dérivés du chlorure de polyvinyle, de polystyrène, de polyéthylène et polypropylène.

Des substances très variées, organiques ou minérales, pourraient également convenir, à condition de les incorporer dans une masse de matière thermoplastique soudable à chaud avec les parois (8) et (9).

## Exemple de réalisation

A partir d'un outillage identique à celui de la figure 1, (correspondant à une échelle approximative de 1/6), on a réalisé une série de tuyaux en chlorure de polyvinyle rigide (densité 1,4) dont la matière de remplissage est du chlorure de polyvinyle cellulaire (expansé), de densité moyenne 0,5. Il est à noter que, contrairement aux tubes à cœurs expansés et à peau lisse, dans lesquels il existe un gradient de densité entre le cœur et la peau lisse formant paroi externe, la matière de remplissage a une densité sensiblement homogène. On a obtenu des tubes composites ayant les caractéristiques suivantes, comparées à celles de tubes PVC rigide classiques, à paroi pleine, de même diamètre externe.

### Tubes classiques

| Diamètre extérieur en mm | Epaisseur de paroi en mm | Poids au mètre en kg |
|---|---|---|
| 110 | 3,2 | 1,5 |
| 125 | 3,2 | 1,714 |
| 160 | 3,8 | 2,61 |
| 200 | 5 | 4,29 |
| 250 | 6,3 | 6,75 |
| 315 | 8 | 10,8 |
| 400 | 10,5 | 18 |

### Tubes composites fabriqués selon l'invention

| Diam. ext. en mm | Epais. de chaque paroi en mm | Epais. de matière de remplissage en mm | Epais. totale en mm | Poids au mètre en kg | Gain de poids par rapport aux tubes class. % |
|---|---|---|---|---|---|
| 110 | 0,75 | 2,5 | 4 | 1,1 | 26 |
| 125 | 0,75 | 3 | 4,5 | 1,36 | 20,6 |
| 160 | 0,80 | 3,4 | 5 | 1,82 | 30 |

3

0 019 564

Tableau (suite)

| Diam. ext. en mm | Epais. de chaque paroi en mm | Epais. de matiere de remplissage en mm | Epais. totale en mm | Poids au mètre en kg | Gain de poids par rapport aux tubes class. % |
|---|---|---|---|---|---|
| 200 | 1 | 4,5 | 6,5 | 3,07 | 28,4 |
| 250 | 1 | 6,5 | 8,5 | 4,62 | 31,5 |
| 315 | 1,25 | 9 | 11,5 | 7,63 | 29,3 |
| 400 | 1,50 | 11 | 14 | 11,77 | 34,6 |

La mesure de la résistance à l'écrasement, selon les tests habituels a montré une supériorité pour le tube, selon l'invention, allant de 5 à 20 % par rapport au tube classique, selon les diamètres considérés.

L'assemblage habituel par manchonnage a pu être effectué aisément sans aucune modification des outillages et du mode de mise en œuvre.

Les tubes, obtenus par le procédé et l'appareillage, objets de l'invention, sont particulièrement bien adaptés à la confection de canalisations enterrées pour assainissement et drainage, et permettent, à performances au moins égales, d'abaisser les consommations de matière de 25 à 30 % environ.

## Revendications

1. Procédé de fabrication, par extrusion, de tubes plastiques à structure composite, formés de deux parois enserrant une matière de remplissage allégé adhérant auxdites parois, procédé selon lequel on introduit, par extrusion dans une tête de répartition (1), chauffée et régulée, la matière (2) constituant les parois des tubes, on sépare cette matière en deux veines d'écoulement coaxiales distinctes (8) et (9), entre lesquelles on injecte, par une deuxième tête d'extrusion (4) la matière de remplissage allégé (3) formant une troisième veine d'écoulement (11), on rapproche et met en contact les trois veines (8), (9) et (11) constituant ainsi une ébauche avec sa structure définitive (13), et à laquelle on donne ses formes et dimensions définitives par un passage dans un outillage classique comportant un trèfle (15), une filière (17) à profil convergent, un mandrin (18) et un conformateur extérieur (19), caractérisé en ce que l'ébauche (13), après avoir reçu sa structure définitive à trois couches dès la sortie de la tête de répartition (1), passe sur un cône divergent (14), placé entre la tête de répartition (1) et le trèfle (15), de façon à lui conférer un diamètre supérieur au diamètre du tube définitif, puis passe sur la zone convergente de la filière (17).

2. Appareillage pour la mise en œuvre du procédé de fabrication par extrusion de tubes plastiques à structure composite, selon la revendication 1 comportant :

— une tête de répartition (1), chauffée et régulée, alimentée d'une part, par une première extrudeuse qui introduit la matière (2) constituant les parois, et d'autre part, par une seconde extrudeuse (4) qui introduit la matière de remplissage (3),

— un moyen de séparation (6) en deux veines d'écoulement distinctes (8), (9), de la matière constituant les parois,

— un moyen d'introduction, entre ces deux veines d'écoulement de la matière de remplissage,

— un moyen de rapprochement (7) et de mise en contact des trois veines (8), (9), (11) pour former l'ébauche (13) avec sa structure définitive,

— un outillage d'extrusion, chauffé et régulé, comportant un trèfle (15) une filière à profil convergent (17), un mandrin (18),

— un conformateur extérieur (19),

caractérisé en ce qu'il comporte un cône de sortie divergent (14) disposé à la sortie de la tête de répartition (1) et avant le trèfle (15), le diamètre maximal du cône divergent (14) étant supérieur au diamètre du tube extrudé.

## Claims

1. A process for the manufacture, by extrusion, of plastic tubes having a composite structure and formed by two walls enclosing a thinned down filling material adhering to said walls, a process according to which the material (2) forming the walls of the tubes is introduced, by extrusion, into a heated and regulated distribution head (1), this material is separated into two distinct coaxial streams (8) and (9), between which the thinned down filling material (3) forming a third stream (11) is injected by a second extrusion head (4), the three streams (8), (9) and (11) are brought together into a contacting relation so that they thus form a blank with its final structure (13) which is given its final shape and dimensions by

4

passing through a conventional tool comprising a trefoil (15), a die (17) having a converging profile, a mandrel (18) and an external conformator (19), characterised in that after the blank (13) has received its final three-layered structure on emerging from the distribution head (1), it passes over a diverging cone (14), positioned between the distribution head (1) and the trefoil (15), in order to receive a diameter which is greater than the diameter of the final tube, and it then passes over the converging zone of the die (17).

2. An apparatus for carrying out the process for the manufacture, by extrusion, of plastic tubes having a composite structure according to claim 1, comprising :

— a heated and regulated distribution head (1), supplied on one side by a first extruder which introduces the material (2) constituting the walls, and on the other side, by a second extruder (4) which introduces the filling material (3),

— a means (6) of separating the material constituting the walls into two distinct streams (8), (9),

— a means of introducing the filling material between these two streams,

— a means (7) of bringing together into contacting relation the three streams (8), (9), (11) to form the blank (13) with its final structure,

— a heated and regulated extrusion tool, comprising a trefoil (15), a die (17) having a converging profile, a mandrel (18),

— an external conformator (19),

characterised in that it comprises a diverging outlet cone (14) positioned at the outlet of the distribution head (1) and upstream of the trefoil (15), the maximum diameter of the diverging cone (14) being greater than the diameter of the extruded tube.

**Ansprüche**

1. Verfahren zum Herstellen von Kunststoffrohren mit zusammengesetztem Aufbau durch Extrudieren, die durch zwei Wände gebildet sind, die ein an den Wänden haftendes ausgedünntes Füllmaterial einschließen, mit Einführen des die Wände der Rohre bildenden Materials (2) durch Extrudieren in einen geheizten und geregelten Verteilungskopf (1), mit Trennen dieses Materials in zwei koaxiale gesonderte Strömungsbahnen (8) und (9), zwischen die durch einen zweiten Extrudierkopf (4) das eine dritte Strömungsbahn (11) bildende ausgedünnte Füllmaterial (3) eingespritzt wird, durch Nähern und in Berührungbringen der drei Bahnen (8, 9 und 11), die somit mit ihrem endgültigen Aufbau einen Rohling (13) bilden und denen ihre endgültigen Formen und Abmessungen durch einen Durchtritt durch eine herkömmliche Vorrichtung mit einem Kleeblatt (15), einem Spritzmundstück (17) mit konvergierendem Profil, einem Dorn (18) und einer äußeren Abkühlvorrichtung (19), dadurch gekennzeichnet, daß der Rohling (13) nach der Annahme seines endgültigen Aufbaus mit drei Schichten beim Austritt aus dem Verteilungskopf (1) sich auf einem divergierenden Kegel zwischen dem Verteilungskopf (1) und dem Kleeblatt (15) derart bewegt, daß ihm ein Durchmesser erteilt wird, der größer als der Durchmesser des endgültigen Rohrs ist, und sich dann auf der konvergierenden Zone des Spritzmundstücks (17) bewegt.

2. Vorrichtung zum Durchführen des Verfahrens durch Extrudieren von Kunststoffrohren mit zusammengesetztem Aufbau nach Anspruch 1,

— mit einem geheizten und geregelten Verteilungskopf (1), der gespeist wird einerseits durch einen ersten Extruder, der das die Wand bildende Material (2) einführt, und andererseits durch einen zweiten Extruder (4), der das Füllmaterial (3) einführt,

— mit einer Einrichtung (6) zum Trennen des die Wände bildenden Materials in zwei gesonderte Strömungsbahnen (8, 9),

— mit einer Einrichtung zum Einführen des Füllmaterials zwischen die beiden Strömungsbahnen,

— mit einer Einrichtung (7) zum Nähern und in Berührungbringen der drei Bahnen (8, 9, 11) zur Bildung des Rohlings mit seinem endgültigen Aufbau,

— mit einer geheizten und geregelten Extrudiervorrichtung mit einem Kleeblatt (15), einem Spritzmundstück (17) mit konvergierendem Profil und einem Dorn (18),

— mit einer äußeren Abkühlvorrichtung (19),

gekennzeichnet durch einen divergierenden Austrittskegel (14), der am Austritt des Verteilungskopfs (1) und vor dem Kleeblatt (15) angeordnet ist, wobei der maximale Durchmesser des divergierenden Kegels (14) größer als der Durchmesser des extrudierten Rohrs ist.